# EUROPEAN PATENT SPECIFICATION

(11) **EP 1 579 430 B1**
(45) Date of publication and mention of the grant of the patent: **04.10.2006**
(21) Application number: 03772470.5
(22) Date of filing: 17.11.2003
(51) Int. Cl.: G11B 7/00, G11B 7/12, G11B 7/24

(54) **OPTICAL INFORMATION RECORDING MEDIUM**
OPTISCHES INFORMATIONSAUFZEICHNUNGSMEDIUM
SUPPORT D'ENREGISTREMENT D'INFORMATIONS OPTIQUE

(30) Priority: 18.12.2002 EP 02080615
(43) Date of publication of application: 28.09.2005
(73) Proprietor: Koninklijke Philips Electronics N.V., 5621 BA Eindhoven (NL)
(72) Inventor: KURT, Ralph, NL-5656 AA Eindhoven (NL); BAKKERS, Erik, P., A., M., NL-5656 AA Eindhoven (NL)
(74) Representative: van Liempd, Jan
(86) International application number: PCT/IB2003/005253
(87) International publication number: WO 2004/055786

(56) References cited:
- US-A- 6 094 410
- US-A1- 2002 025 490
- US-A1- 2002 136 142

## Description

The invention relates to an optical information recording medium and methods and devices to record and read information thereto and thereof.

A variety of optical information recording media are well known in the art, particularly in the form of compact discs (CDs) and digital versatile disc (DVD) media. The projection of a modulated laser beam on the recording medium brings about a change of the optical properties of the medium, which change can be optically detected later during a reading operation.

For example, US 6,094,410 discloses an optical recording medium comprising cholesteric liquid crystals or multilayer dielectric thin film material, both alternatively used in stacks of information recording layers. By aiming a laser beam on a preselected information recording layer, a reflection signal corresponding to information recorded on said information layer is elicited and measured. A high information density is then achieved by stacking information layers in such way that neighboring information layers differ (a) in the polarity of light reflected by the respective information layer and/or (b) in the wavelength of the reflection signal emitted from the respective information layer. US 2002/136 142 discloses an optical data storage medium comprising semiconductor nanometre-sized crystals capable of emitting luminescent light, but does not suggest nanotubes or nanowires. US 2002/025 490 discloses the use of nanotubes and nanowires for building machine-readable security marks, but does not refer to an information recording medium.

However, further development is needed for increasing the density of information recordable on such media, the stability of information recorded thereon by increasing the decay time, and in general for finding more cost efficient and easier to use media.

According to the invention, these objects can be achieved by an optical information recording medium comprising nano-elements selected from the group consisting of nanotubes and nanowires, said nano-elements being capable of emitting luminescent light.

Nanotubes and nanowires are small bodies of more or less cylindrical or prismatic shape. Whenever hereinafter reference is made to their orientation, this relates to the orientation of their central cylindrical or prismatical axis.

Nanowires, sometimes also called filaments or whiskers, have been described for a variety of materials, among them are nanowires of indium phosphide (InP) (X. Duan et al., Nature 409 (2001), 66; J. Wang et al., Science 293 (2001), 1455-1457), zinc oxide (ZnO) (M. Huang et al., Science 292 (2001), 1897-1899), gallium arsenide (GaAs) and gallium phosphide (GaP) (K. Haraguchi et al., Appl. Phys. Lett. 60 (1992), 745; X. Duan et al., Nature 409 (2001), 66), silicon carbide (SiC) (S. Motojima et al., J. Crystal Growth 158 (1996), 78-83), boron nitride (BN) (W. Han et al., Applied Physics Letters 73, 21 (1998) 3085), nickel dichloride (NiCl₂) (Y. Rosenfeld Hacohen et al., Nature 395 (1998) 336), molybdenum disulfide (MoS₂) (M. Remskar et al., Surface reviews and Letters, vol. 5 no. 1 (1998) 423) and tungsten disulfide (WS₂) (R. Tenne et al., Nature 360 (1992) 444). Two materials are presently known to form nanotubes: carbon (C) (Iijima, S., Nature 354 (1991), 56-58; Ebbesen T W and Ajayan PM, Nature 358 (1992), 220) and silicon (Si) (B. Li et al., Physical Review B 59, 3, (1999) 1645).

Carbon nanotubes are particularly well studied. They are one- and/or multilayered cylindrical carbon structures of basically graphitic (sp2-) configured carbon. The existence of both metallic and semiconducting nanotubes has been confirmed experimentally. Furthermore, it has recently been found that single-walled 4 Å carbon nanotubes aligned in channels of an AlPO₄-5 single crystal exhibit optical anisotropy, in that the carbon nanotubes are nearly transparent in the wavelength region from 1.5 µm till 200 nm, when the light electric field is polarized perpendicular to the central axis, and that strong absorption is observed in the spectral range from 600 nm to at least 200 nm, when the light electric field is polarized parallel to the central axis (Li Z M et al., Phys. Rev. Lett. 87 (2001), 127401-1 - 127401-4).

Similar properties have been found for nanotubes or nanowires other than those consisting of carbon. Nano-elements therefore most conveniently combine the following features: They absorb light, said absorption properties being effective in a broad range of wavelengths, said absorption also being a function of the orientation of the nano-elements relative to a plane of polarization of said light, and the orientation of nano-elements can be directed and/or stabilized mechanically and/or by an electric field.

Furthermore, nano-elements have been shown to have luminescence properties. For example, single walled carbon nanotubes formed in micro-channels of zeolite crystals emit light in the visible region upon excitation (N. Nagasawa et al., Journal of Luminescence 97 (2002), 161-167). Such properties are also known from other types of nano-elements and nanowires (J.-M. Bonard et al., Phys. Rev. Lett. vol. 81, no. 7, 1441 (1998); M. H. Huang et al., Science vol. 292 (2001), 1897; K. Yamamoto et al., J. Phys. D: Appl. Phys. 31 (1998), 34-36; X. Duan et al., Nature 409 (2001), 66; J. Wang et al., Science vol. 293 (2001), 1455). The emitted (luminescent) light is polarized depending on the orientation of the light emitting nano-element. It is reported that the plane of polarization of the emitted light is often the same as that of the absorbed light (N. Nagasawa et al., supra). Within the scope of this invention, a species of nano-elements is any set of nanotubes and/or nanowires whose emission spectra comprise light of the same wavelength upon excitation. Preferably, the nano-elements of one species emit light only of a small band of wavelengths. The first and second species of nano-elements of the optical information recording medium according to the invention differ in luminescence wavelength, that is, there exists at least one wavelength of luminescence radiation that is emitted by only the first or only the second species of nano-elements, but not by the other species. In addition to this or alternatively, the first and second species of nano-elements of the optical information recording medium according to the invention differ in the orientation of the plane of polarization of luminescent light, that is light emitted by luminescence of the respective nano-elements.

The lifetime of luminescence signals emitted by nano-elements (nanotubes and nanowires) is short compared to common luminescent dyes. For carbon nanotubes, the luminescence signals of 90 nanoseconds and shorter, up to a few hundred picoseconds, can be achieved, whereas common luminescent materialshave typical lifetimes of a few microseconds or longer. Nano-elements are therefore particularly advantageous in such reading and writing condition, in which an optical information recording medium is repeatedly subjected to illumination, like a CD rotating in front of a reading or writing head. The shorter the luminescence signal, the less unwanted signals arising from previous illuminations of the optical information recording medium arise. Therefore, nano-elements allow to increase the reading and writing speed of optical information recording media.

The wavelength of emitted light can be controlled by a variety of parameters, among which are: The material and composition forming the respective nano-element, doping of the nano-element, the nano-element diameter, its chirality and crystalline perfection, and the number of walls forming the nano-element.

Nano-elements, and especially carbon nanotubes, also provide a very large absorption contrast between light polarized perpendicular and parallel to the tube direction (axis of anisotropy), respectively. At 405 nm, for example, an optical density of approximately 4-8 can be achieved, for some nanowires the polarization contrast ratio can be as high as 80, whereas normal phase change materials are characterized by an optical density of approximately 1. Thus, the optical recording media of the invention allow a very exact reading of information recorded thereon. Furthermore, already small concentrations of nano-elements in an information layer yield an useful optical recording medium.

In addition, nano-elements are cheap, lightweight and easy to manufacture and to recycle. By using nano-elements in an information layer of an optical information recording medium, these advantages are favorably conveyed to the medium per se.

Nano-elements are also very stable and do not readily decay or racemize under everyday use conditions of optical information recording media. Thus, a pattern of absorption of polarized light once recorded into an optical information recording medium according to the invention is also very stable and does not decay readily.

The information density of current optical recording media is limited by the wavelength of the irradiating laser beam and by the grain size of the phase change material. As nano-elements are very small in one dimension (for example, carbon nanotubes have extensions of 0.3 nm till approximately 100 nm), they can be packed to a great density that no longer limits the information density of the recording medium.

The absorption contrast of differently oriented nano-elements is high for a broad range of wavelengths. When recording and reading information signals of two information streams, or when a location of the optical recording medium is otherwise used to record and read two or more information signals, the recording and reading of these information signals can be performed at a single wavelength; it is not, in preferred embodiments of the invention, necessary to provide, for each information signal, a light source emitting light of an individual wavelength. This greatly simplifies construction of recording and reading devices.

The shape of the optical information recording medium is arbitrary; particularly, the recording medium can be disc-, tape- and card-shaped.

When the optical recording medium is essentially a disk- or card-shaped medium or of another shape having a plane wherein the medium most predominantly extends, the nano-elements can lie within the plane or be oriented perpendicular thereto. Li et al. (Science 274 (1996), 1701) and Ren et al. (Science 282 (1998), 1105) have demonstrated that carbon nanotubes can be grown perpendicular to a surface; carbon nanotubes can also be chemically affixed on surfaces (Z. Liu et al., Langmuir 16, no. 8 (2000), 3569); for other nano-element types, manufacturing and/or application perpendicular to a surface has been described as well (see above). Furthermore, nano-elements can be applied by spray jet deposition to a surface and, if so desired, be oriented subsequently by flow-alignment (B. Vigolo et al., Science 290 (2000), 1331; H. Shimoda et al., "Self assembly of CNTs", Advanced Materials 14 no. 12 (2002), 899). The different application or deposition methods available for nanotubes and nanowires allow to orient nano-elements, particularly carbon nanotubes, perpendicular to the surface of an optical information recording medium and, particularly, in parallel with the direction of light irradiating the medium.

A particularly preferred optical information recording medium comprises a first and a second species of nano-elements, said species differing in
a) luminescence wavelengths,
b) the orientation of the plane of polarization of luminescent light, or
c) both a) and b).

The differing species favorably allow to discriminate between information recorded at specific locations composed of nano-elements of a selected species. When such location is irradiated by luminescent light, any unwanted luminescence originating from neighboring locations comprising nano-elements of other species can be filtered away by the wavelength properties of the unwanted luminescence, its polarization properties or both its wavelength and polarization properties. Thus, an optical information recording medium comprising two species ofnano-elements advantageously improves the signal to noise ratio when reading information from such medium.

Nano-elements therefore allow to encode information on a location of an optical information recording device in a number of ways:

The information can be recorded (encoded) on said optical information recording medium by exploiting a difference in the wavelength or orientation of the plane of polarization of luminescent light: A first information can thus be recorded by effecting, according to the first information to be recorded, the presence or absence of nano-elements of a first species on a location of the optical information recording medium. A second information can then be recorded by effecting, according to the second information to be recorded, the presence or absence of nano-elements of a second species on the same location of the optical information recording medium. As the first and second species of nano-elements differ in luminescence wavelengths and/or the orientation of the plane of polarization of luminescent light, there exists one wavelength and/or polarization, respectively, at which only one of the species emits luminescent light.

The information recorded on the optical information recording medium can be read (decoded) by irradiating the location to read with light that can be absorbed by the nano-elements of the first and second species and then, for each species, measuring the intensity of luminescence that is specific for the respective species. The specificity of the luminescence can pertain to a) the wavelength, b) the orientation of the plane of polarization or c) both a) and b).

The first and second information can be independent from each other. For example, the first information can be a digital information, while the second information can be an analogous or multi-level information. This can be most conveniently achieved by exploiting a difference in the orientation of the plane of polarization of light absorbed by nano-elements of the first and the second species:

A digital information signal can be recorded by (pre-)selecting a plane of polarization and providing one or more nano-elements of a chosen species absorbing light polarized parallel to said preselected plane. When the thus oriented nano-elements are irradiated by light with a plane of polarization corresponding to said preselected plane, light is either absorbed or not, depending on the orientation of the nano-element or nano-elements. In one encoding scheme, a digital "1 "-information is recorded by effecting the presence of nano-elements absorbing polarized light of the preselected plane of polarization; a digital "0"-information is then recorded by effecting the absence of such nano-elements. In another encoding scheme a digital "1"-information is recorded by effecting the absence of nano-elements absorbing polarized light of the preselected plane of polarization and a digital "0"-information is recorded by effecting the presence of said nanocrytals absorbing polarized light of the preselected plane of polarization.

Likewise, also a multi-level information signal can be encoded on an optical information recording medium. For each level to be encoded, a corresponding plane of polarization is preselected. An information signal of a given level can then be recorded by effecting the presence (or absence) of one or more nano-elements of a chosen species oriented in parallel to the corresponding preselected plane. Reading and decoding of the level information is therefore possible by determining whether or not nano-elements of a given orientation are present. This principle of recording and reading can also be applied on analogous information signals by providing a continuous range of nano-element orientations.

In particularly preferred embodiments of the optical information recording medium, the first and second species of nano-elements further differ in the orientation of the plane of polarization of light absorbed by said nano-elements. The nano-elements of the first species are therefore oriented in such way that they do not absorb light absorbed by nano-elements of the second species. Preferably, the nano-elements of the second species are also oriented in such way that they do not absorb light absorbed by nano-elements of the first species. It is then particularly easy to address a species of nano-elements by selecting a plane of polarization specific for the respective species.

A stream of information can be recorded on an optical recording medium according to the invention by splitting the stream of information into individual information signals, assigning an individual location on said medium to each information signal, and effecting the presence (or absence) of nano-elements of a chosen species at each location corresponding to the information to be recorded at said location and corresponding to the chosen encoding scheme. This way, for each species a pattern of nano-elements absorbing linearly polarized light is created corresponding to the information to be recorded.

It is particularly noteworthy that, for each location, the presence or absence of nano-elements of a preselected orientation can represent an information signal independent of the presence or absence of nano-elements with other orientations. The recording medium according to the invention therefore allows, for each species, to store two or more information signals (or information signals of two or more information streams) at each location of said medium, provided that said location is large enough that at least two nano-elements of different orientation can be present at said location.

For example, information signals of a first information stream may be encoded by a pattern of nano-elements of a first species absorbing linearly polarized light with a first orientation of the plane of polarization, while information signals of a second information stream can be encoded by a pattern of nano-elements of the same first species, but absorbing linearly polarized light with a second orientation of the plane of polarization; said second orientation can, for example, be perpendicular to the first orientation. This way, the patterns corresponding to the first and second stream of information are in effect superimposed, while still being optically independent from each other. Information signals of additional information streams can be encoded by respective patterns of nano-elements of a second or further species differing from the first or all other species in luminescence wavelength. The optical recording medium according to the invention thus allows for a high information density.

For reading information encoded on an optical information recording medium according to the invention, linearly or circularly polarized light can be used. Linearly polarized light is absorbed only by properly oriented nano-elements, whereas other nano-elements essentially are not affected, that is, they do not show strong luminescence. However, when the recording medium is irradiated with circularly polarized light, the component or components with a plane of polarization corresponding to the orientation of nano-elements at the irradiated location of the recording medium will be absorbed. The absorption of light causes an emission of luminescence specific for each species of nano-elements. This emission can be measured and used to reconstruct and decode the information recorded on said medium. In both cases, the intensity of luminescent light emitted from the optical information recording medium is modulated in accordance with the plane of polarization of the light irradiating the locations of said medium and in accordance with the presence or absence of nano-elements that absorb light of said polarization.

In preferred embodiments of the optical information recording medium, the nano-elements of one species, preferably the nano-elements of all species, are embedded in a transparent substrate. The transparent substrate is optically transparent at least at the wavelengths used with common optical information recording media, i.e. at approximately 785 nm, 650 nm and/or 405 nm. It is, however, preferred, when the transparent substrate is transparent at shorter wavelengths in the ultraviolet range, e.g. at 290-230 nm. This way, a high information density on the optical information recording medium according to the invention can be achieved. For suitable transparent substrates see below.

It is further preferred when the two species of the optical information recording medium further differ in the respective irradiation wavelength for inducing luminescence of the respective species. This facilitates reading information from an optical information recording medium, as it allows to selectively excite one species of nano-elements and suppress unwanted luminescence from nano-elements of other species.

Further preferred is an optical information recording medium, wherein the nano-elements are semi-conducting nano-elements. Such nano-elements are particularly suitable for emitting luminescent light.

It is also preferred when the nano-elements of at least one species, more preferably of both species, emit luminescent light in the range of visible wavelengths. This facilitates the construction and operation of reading devices for such optical information recording media, as a variety of cheap and light-weight detectors, lenses and other light-influencing devices are available for influencing visible light. Visible light comprises light of the wavelengths between 780 nm and 360 nm.

In a further preferred embodiment of the optical information recording medium, the two species are selected from the group consisting of InAs, GaAs, GaN, InP, CdSe, CdS, ZnS, ZnSe, ZnO, GaP, BN, NiCl2, MoS2, WS2, SiC, Si and C nano-elements. The nano-elements thus consist predominantly or completely of the enumerated materials. This does include the possibility that the nano-elements are doped or alloyed with other elements or materials. The nano-elements consisting predominantly or completely of the enumerated materials are particularly suitable for emitting strong luminescence radiation in the range of visible wavelengths.

Also preferred is an optical information recording medium, wherein the nano-elements are single-walled nanotubes. These nanotubes particularly facilitate selecting their luminescence wavelength and polarization properties.

The nano-elements of a preferred embodiment of the invention are carbon nanotubes. Carbon nanotubes most favorably combine the above described advantages inferred by using nano-elements in an optical recording medium. In the following, all references to nano-elements can be interchanged for references to carbon nanotubes and vice versa, unless explicitly stated otherwise.

In order to separate the two species of nanotubes by their luminescence and/or polarization properties, an optical information recording medium is further preferred wherein the two species differ in composition and/or in diameter, wherein the term "diameter" refers to the diameter of the circumference circle. These parameters are particularly easy to control and therefore facilitate to assign nano-elements to one or the other species.

It is also preferred when the nano-elements of one species are aligned in parallel in a predefined area. This configuration is particularly suitable for use in band or tape type recording media, which are moved alongside a recording or reading head. In the field of view of the recording or reading head, the orientation of the nano-elements substantially does not change. Thus, the construction and maintenance of a corresponding recording and/or reading device is facilitated.

Particularly preferred is an optical information recording medium, wherein the nano-elements of one species are radially aligned relative to an axis of the optical information recording medium. In such configuration, light polarized in said radial direction will be strongly absorbed, leading to a luminescence signal, whereas light polarized perpendicular to said radial direction will mostly not be absorbed. Such optical recording medium is particularly suitable for use with an optical disc reading and/or writing device, where in order to address different recording locations on said medium, the light source and/or detector are moved radially across the medium and/or the medium is rotated around said axis. When said medium according to the invention is rotated, or when the light source and/or detector is moved radially, the orientation of the nano-elements in the field of view of the light source and/or detector remains unchanged; thus it is possible to construct recording media so that a single orientation of a polarization filter suffices to record and/or read information on or from different locations of the optical information recording medium. This facilitates the construction and maintenance of optical information recording and/or reading devices.

Preferably, the optical information recording medium comprises first and second type locations, said first type locations comprising nano-elements of the first species and being essentially devoid of nano-elements of the second species, and said second type locations comprising nano-elements of the second species and being essentially devoid of nano-elements of the first species. This way, the two nano-element species are in effect spatially separated from one another. This facilitates reading of information encoded on such optical information recording medium, as for each location only one species of nano-elements is to be expected. Any luminescence signal that does not correspond to the luminescence wavelength and the orientation of the plane of polarization specific for the nano-elements of a location in question cannot belong to the pattern of information and coded at said location and can therefore be ignored.

The first and second type locations can be arranged in any shape. It is, however, preferred that the first and second type locations are arranged in first and second type tracks, respectively, each first type track comprising first type locations and being essentially devoid of second type locations, and each second type track comprising second type locations and being essentially devoid of first type locations. The track structure mimics the structure of known optical information recording media like CDs and DVDs. Such optical information recording media according to the invention are therefore particularly suitable for being backwards compatible and/or adaptable with conventional CD and/or DVD recording and reading devices, respectively.

Furthermore, the nano-elements of one species preferably are comprised in an information layer for carrying an information. The term "layer" is meant not to limit the shape of the information layer to a sheet-like shape common for tapes and discs, but generally refers to any block or shape useful for carrying an information, particularly comprising sheet-like shapes.

A particularly preferred embodiment of the optical information recording medium comprises a first type information layer for carrying an information, said first type information layer comprising first type locations and being essentially devoid of second type locations, and a second type information layer for carrying an information, said second type information layer comprising second type locations and being essentially devoid of first type locations. The spatial separation of the species of nano-elements facilitates the production of the optical information recording medium.

When the nano-elements are located in information layers according to their respective species as just described, it is preferred when each two neighboring information layers mutually differ in the orientation of the plane of polarization of light absorbed by nano-elements of the respective information layers, and/or in a wavelength and/or of the plane of polarization of luminescent light emitted from nano-elements of the respective information layer. Each two neighboring information layers satisfying the above condition form a deck. Such decks facilitate the correct addressing of an information layer for reading and/or writing purposes. The largest set of neighboring information layers differing in either the orientation of the plane of polarization of light absorbed by nano-elements of the respective information layers, and/or in a wavelength and/or direction of the plane of polarization of luminescent light emitted from nano-elements of the respective information layer, is called a stack. An optical information recording medium according to the invention can comprise more than one stack, provided that the distance (stack distance) between all information layers with identical absorption and luminescence properties is large enough to allow focusing a beam of light on any such information layer without the corresponding information layer with identical absorption and luminescence properties of another stack being also in focus.

In a further preferred embodiment, the nano-elements of each information layer are oriented in a direction specific for each individual information layer. The information layer to record information in or to read information from can then be addressed by selecting the plane of polarization of light corresponding to the selected information layer. For example, in an optical recording medium comprising two information layers, the nano-elements of a first information layer can be radially aligned relative to an axis of the optical information recording medium, whereas the nano-elements of a second information layer can be aligned perpendicular to the nano-elements of said first information layer. In such configuration, to read from or record information on the first information layer, the plane of polarization of irradiating light is adjusted radially aligned relative to said axis of the optical information recording medium, thereby obtaining highest absorption and luminescence only by the nano-elements of the first information layer, whereas the nano-elements of the second information layer have little or no effect on light absorption. To read from or record information on the second information layer, the plane of polarization is adjusted parallel to the nano-elements of the second information layer, that is, perpendicular to the direction necessary to address the first information layer, thereby obtaining highest absorption and luminescence only by the nano-elements of the second information layer, whereas the nano-elements of the first information layer have little or no effect on light absorption. The first and second information layer can therefore be treated as being optically independent from one another. Further layers can be introduced as long as the cross-talk between different layers is smaller than the contrast in one layer. By selecting a plane of focus of the irradiated light, cross-talk between the information layers can be further limited.

It is further preferred that, for each information layer, all neighbor locations of neighbor information layers are essentially devoid of nano-elements emitting light absorbed by the nano-elements of the location in question. Thus, the cross-talk between luminescence signals of neighboring locations is minimized.

Optical information recording media of the just mentioned type preferably have their information layers arranged to obtain a band gap gradient, at least for each stack of information layers. To achieve a band gap gradient, the nano-elements emitting light of a longer wavelength are arranged in a greater distance relative to the surface of the optical information recording medium, through which light irradiating the information layers for recording and/or reading purposes is to pass through, compared to nano-elements emitting luminescent light of shorter wavelengths. Thus, the nano-elements whose luminescence signal has to travel the longest way to be detected will essentially not or only to a very limited amount induce luminescence signals of information layers it passes on its way to be detected. For example, a stack of information layers could consist of information layers made of InP, CdSe, and ZnO, the InP-layer being furthest way from surface behind which a detector to detect the intensity of luminescent radiation is to be expected. When the InP-layer is excited with UV light, the nano-elements of this layer will emit luminescence light with wavelength of approximately 980 nm; this light will essentially be not absorbed by the CdSe- and ZnO-layers. Therefore, the cross-talk and interaction between information layers can be substantially limited. The person skilled in the art can easily draw up sequences of information layers suiting to his particular needs. He can, in particular, take the following optical band gaps and wavelengths into account:

| Material | Optical band gap/luminescence wavelength |
|---|---|
| InAs | 3400 nm |
| GaAs | 919 nm |
| GaN | 371 nm |
| InP | 984 nm |
| CdSe | 730 nm |
| CdS | 517 nm |
| ZnS | 335 nm |
| ZnSe | 460 nm |
| ZnO | 388 nm |

An optical information recording medium is particularly preferred comprising two stacks of information layers, each stack being arranged to form a band gap gradient, and the nano-elements of each stack being arranged to absorb light with an orientation of the plane of polarization specific for each individual stack of information layers. This way, in addition to varying the material forming the nano-elements and their light absorption properties are varied, allowing to include more than one stack of optically information layers forming a band gap gradient in the optical information recording medium.

Instead of relying exclusively on the material of the nano-elements to form a band gap gradient, it can also be possible to vary other parameters of the nano-elements in order to achieve a desired band gap. For example, varying the diameter of carbon nanotubes leads to a variation in their band gap and luminescence wavelength. To achieve a band gap gradient, the thinner nanotubes have to lie above the thicker ones with reference to the surface behind which a detector is to be expected. The diameter of nanowires is, in preferred embodiments of the invention, between 1 nm and 15 nm, more preferably between 3 nm and 10 nm. By varying the nanowire's diameter, it is possible to obtain a wavelength shift as large as 300 nm. For nanotubes, particularly carbon nanotubes, preferred diameters are between 0,3 nm and 30 nm. Of course, to obtain a band gap gradient both nano-elements of varying materials and those of varying diameter can be combined.

The optical information recording medium can furthermore comprise a reflective layer for reflecting light transmitted through the information layer. Luminescent light emanating form nano-elements thus can be emitted and reflected in the direction of a detector, further adding to the contrast between luminescent an non-luminescent areas. If the number of information layers in said optical information recording medium is greater than one, it is particularly preferred to position the reflective layer so that luminescent light of all information layers is reflected. The reflective layer can also be placed between two information layers, so as to limit or bar luminescent light of one information layer from irradiating the other information layer. When the reflective layer is also reflective for light used to irradiate the optical information recording medium, an optical recording medium with two faces is thereby created, with the information layer(s) of one face being shielded from the information layer(s) of the other face by the reflective layer.

The reflective layer can also be polarization dependent, reflecting only light with a predefined plane of polarization. Such reflective layers can be made, for example, of Ag nanoparticles, or by using standard optical multilayers. The polarization dependent reflective layer or layers can be placed between two information layers such as to reflect only light with a predefined plane of polarization. This is particularly useful when the adjacent information layer comprises nano-elements so oriented to absorb light that can be reflected by the reflective layer. In such configuration, the absorption contrast of a single information layer is advantageously enhanced, and a reflective layer can be used individually with each information layer.

For practical considerations optical information recording media are preferred that comprise a transparent cover layer. The cover layer allows to protect the nano-elements against mechanical stress.

In a particularly preferred embodiment of the optical information recording medium of the invention, the nano-elements of at least one species, preferably the nano-elements of all species, are embedded in a transparent substrate, said substrate being essentially solid at temperatures below 30 °C. This enhances the stability of orientation of the nano-elements. The nano-elements are thus in effect frozen and prevented from accidentally changing their orientation. Within the scope of this invention, a transparent substrate for embedding nano-elements therein is considered to be essentially solid when the viscosity of the information layer at and below 30 °C is or is higher than 10 Pa s (100 Poise), more preferably higher than 20 Pa s, even more preferably higher than 50 Pa s (500 Poise). At viscosities lower than 10 Pa s, the transparent substrate can be considered as being essentially liquefied. Preferably, the transparent substrate is essentially solid up to temperatures of 80 °C, more preferably up to temperatures of 100 °C. This enhances the stability of the orientation of nano-elements during normal conditions of use of an optical information recording medium. When nano-elements are located in an information layer, this layer is considered as being essentially solid when the transparent substrate of that information layer is essentially solid; the layer is considered as being essentially liquefied when the transparent substrate of the information layer is essentially liquefied.

An information layer being essentially solid at one temperature and liquefiable at another temperature allows to use the optical information storage medium for rewrite operations by enabling a reorientation of nano-elements, as described below.

In another preferred embodiment, the transparent substrate is liquefiable at temperatures where the nano-elements are not substantially destroyed. The information layer can be liquefied by decreasing the viscosity of the information layer's transparent substrate, when such substrate is essentially solid otherwise. It is therefore not necessary to liquefy or otherwise change the structural integrity of the nano-elements of the information layer. Generally, nano-elements can withstand temperatures of 100 °C; carbon nanotubes, for example, are substantially destroyed at 800-1000 °C. Liquefaction allows to reorient the nano-elements of a liquefied information layer, thereby allowing to erase and rewrite locations of a liquefied information layer. In a particularly preferred embodiment, the transparent substrate can be resolidified after liquefaction, in order to regain stability of the orientation of nano-elements.

It is particularly preferred when the transparent substrate is selected from the group consisting of glasses with smelting or glass temperatures below 800 °C, acrylic thermoplastics and paraffins. Such transparent substrates facilitate the production of information layers essentially solid at temperatures below 30 °C. They also allow to manufacture information layers liquefiable at temperatures where the nano-elements, especially carbon nanotubes, are not substantially destroyed, and which can be resolidified after such liquefaction.

For some applications it is advisable when the optical information recording medium further comprises one or more heat sink layers, particularly metal heat sink layers and dielectric layers. Preferably, at least one of the heat sink layers - or the heat sink layer, if the medium comprises only one such layer - is located close to or at the surface of the optical information recording medium. The heat sink layer serves to dissipate heat that may be caused by irradiating the optical information recording medium with a beam of polarized light, thereby focusing the heating to a small location of the medium, whereas adjacent locations are less heated. The heat sink layer can also be identical with the reflective layer.

Also, an optical information recording medium is preferred that also comprises an oxidizer component located close to the nano-elements. This way, the nano-elements absorbing light of a predefined plane of polarization can be easily burnt away locally to create a pattern of absorption of linearly polarized light. This is particularly suitable for a write once optical information recording medium, as the burnt away nano-elements no longer absorb polarized light, and thus no longer emit luminescence, used to write and/or read to and from the recording medium.

Particularly suitable are oxidizer components selected from the group consisting of nitrates, oxides, peroxides, sulfoxides, BaO₂ and Ag₂O. It is furthermore preferred when the transparent substrate and the cover layer (if a cover layer is present) are porous, to let any gases resulting from burning the nano-elements escape from the medium.

Instead of burning the nano-elements away, they could also be alloyed and thereby dissolved into a metal layer. It is therefore advantageous to provide a metal layer in an optical information recording medium according to the invention. Particularly suitable metals are iron (Fe), molybdenum (Mo), nickel (Ni), cobalt (Co), tungsten (W), vanadium (V), chromium (Cr), titanium (Ti), niobium (Nb) and manganese (Mn). The metal layer can be identical with the reflective layer. Instead of metal for forming an alloy, silicon can be used as well.

Carbon nanotubes can also be removed locally by transforming them from their normal sp2-configuration into a diamond-like sp3-configuration (B. Wei et al., Journal of Materials Science Letters 13, 5 (1997), 402; B. Wei et al., Carbon 36, 7-8 (1998), 997). In the sp3 configuration, they do no longer exhibit a pronounced light absorption and do not emit luminescent light.

According to another aspect of the invention, an optical information recording device for recording information on an optical information recording medium is described, said device comprising:
a) a light source for generating a light beam of linearly polarized light,
b) means for changing the orientation of the plane of polarization of the light beam, and
c) means for modulating the light beam in accordance with the information to be recorded in the optical information recording medium.

The device allows to exploit the advantages conveyed by the above optical information recording medium according to the invention. Particularly, it allows to adapt the recording device to differing orientations of nano-elements. For instance, as described above the orientation of nano-elements of a recording medium comprising two information layers may be differing among the information layers. In order to address a specific information layer, the orientation of the plane of polarization is then selected according to the selected information layer.

Preferably, the optical information recording device comprises means for focusing the beam of linearly polarized light to different focusing planes. This way it becomes possible to address individual stacks or even individual information layers.

It is also preferred when the light source is powerful enough to enable burning away nano-elements of an information layer of an optical information recording medium placed in said recording device. By thus effecting the absence of nano-elements of a specific orientation in an information layer at selected locations, a pattern of absorption of said information layer can be created corresponding to the information to be recorded on said recording medium.

It is especially preferred when the light source emits linearly polarized light. This allows to selectively burn away only nano-elements that absorb light of the selected plane of polarization, essentially without burning away other nano-elements eventually present in that location. Furthermore, linearly polarized light allows to selectively excite specific nano-elements absorbing light of the respectively oriented plane of polarization. When each species of nano-elements of the optical information recording medium is so oriented to absorb only light of one polarization, irradiating the optical information recording medium advantageously causes only nano-elements of the species selected by the polarization of the irradiating light to emit luminescent radiation. This way, unwanted luminescence of other species can be suppressed.

In another preferred embodiment the optical information recording device further comprises means for heating the information layer of an optical information recording medium to allow liquefaction of said information layer. This way, the recording device can be used to allow a reorientation of nano-elements in a heated area of the information layer. In a particularly preferred embodiment of the invention, the source of linearly or circularly polarized light is powerful enough to heat such information layer to allow said liquefaction. It is particularly preferred when the means for heating the information layer allow to liquefy selected locations of the information layer while leaving other locations thereof unliquefied.

It is also preferred that the optical information recording device further comprises means for orienting the nano-elements of an optical information storage device. This way, the recording device allows to reorient nano-elements of one or more information layers, in order to create and/or erase a pattern of absorption of said information layer. The nano-elements can be oriented either by applying a force directly on the nano-elements, or by encasing one or more nano-elements in particles of a solid matrix and applying a force to orient the particles with the nano-elements located therein. Particularly, the nano-elements of the information layer can be located in zeolite particles.

In a particularly preferred embodiment the means for orienting the nano-elements comprise means for applying an electrical field on an optical information recording medium. It has recently been shown that carbon nanotubes can be electrophoretically oriented (Yamamoto K et al., J. Phys. D: Appl. Phys 31 (1998): L34-L36) in a direct current electrical field and in an alternating current electrical field. When nano-elements of an information layer are encased in particles of a solid matrix, e.g. in zeolite particles, the electrical field can be used to orient the particles with the nano-elements located therein.

In another particularly preferred embodiment the means for orienting the nano-elements comprise means for applying linearly polarized light on an optical information recording medium. For practical considerations, these means can be identical with the means for heating the information layer of an optical information recording medium to allow liquefaction of said information layer. The light source, particularly a laser light source, for applying polarized light on an optical information recording medium can provide a local electric field in an information layer of said recording medium, inducing an electric dipole momentum in the nano-elements of the irradiated area of said information layer. The nano-elements of the irradiated area will therefore align with respect to the direction of the polarization of the irradiating light. It is particularly preferred when the means for applying linearly polarized light also allow to change the orientation of the plane of polarization of said light. This way, it becomes possible to orient the nano-elements in any direction.

When reorienting nano-elements in a liquefied information layer, that is, in a liquefied transparent substrate of an information layer, it is advantageous to apply the reorienting force (esp. an electrical field) also during resolidification of the information layer. This way, a random movement of the oriented nano-elements prior to resolidification of the information layer can be prevented.

According to the invention, there is also provided an optical information reading device for reading information from an optical information recording medium as described above, comprising:
a) a light source for irradiating a first location on said optical information recording medium with polarized light of a first orientation of the plane of polarization and a first wavelength, and
b) detector means for generating a first intensity signal corresponding to the intensity of luminescent light emitted by a first preselected species of nano-elements.
   This device favorably allows to determine the plane of polarization of luminescent light emitted by nano-elements. This is particularly advantageous when the orientation of nano-elements in the information layer to read is not known in advance, e. g. when multi-level information has been encoded on the information layer. Furthermore, the device allows to suppress unwanted luminescent radiation of nano-element species different from the one to read.
   In a further improved optical information reading device, the detector means comprise filter means for selectively measuring the intensity of luminescent light of a preselected second wavelength and/or orientation of the plane of polarization. Filter means, like low-pass filters for wavelength cutoff, are particularly suitable to suppress unwanted luminescent radiation. They also prevent light of the first wavelength from entering the detector, for example when such light is scattered or reflected from the optical information recording medium.
   Preferably, the detector means are equipped to differentiate between polarization-isotropic and polarization-anisotropic luminescence. The emission of nanowires is frequently isotropic, whereas due to its crystal structures nanotubes tend to show polarized luminescence emission. By differentiating between polarization properties of different species, a further increase in signal-to-noise ratio when reading information from an optical information recording medium can be obtained.
   Further preferred is an optical information reading device, wherein the detector means are equipped to detecting the intensity of luminescent light of two wavelengths. This is particularly advantageous to allow detecting of the intensity of luminescent light of two wavelengths when a location of an optical information recording medium is irradiated. In general, it holds true that the more wavelengths are measured for each irradiated location of the optical information recording medium, the greater is the certainty for determining the intensity of luminescence radiation of a preselected species of nano-elements. Thus, a reading device of the just described type favorably minimizes the portion of misread locations of an optical information recording medium. The device also allows to simultaneously detect the intensity of luminescent light of two species differing in luminescence wavelength, therefore allowing to increase the speed of reading a suitable optical information recording medium.
   In a further preferred optical information reading device, the light source is equipped to emit light of at least two wavelengths. This is particularly advantageous when the optical information recording medium comprises two species of nano-elements differing in the respective irradiation wavelength for inducing luminescence of the respective species. The device allows to selectively excite nano-elements of one species, while mostly preventing excitation of nano-elements of an other species. This allows to enhance the signal-to-noise ratio when reading an optical information recording medium. Furthermore, it enables the optical information reading device to operate on common optical information recording media that do not comprise luminescent nano-elements, thus rendering the device backward-compatible.
   It is also preferred when the detector means are additionally equipped to simultaneously generating a second intensity signal corresponding to the intensity of luminescent light emitted by a second preselected species of nano-elements. The second species of nano-elements can be located anywhere in relation to the first species, particularly in a neighboring location on the same or an other information layer. It is particularly preferred when the optical information reading device is equipped to detect luminescence intensity signals of the first and the second species of nano-elements simultaneously. This favorably enhances the speed of reading.
   To suppress unwanted luminescence signals, it is furthermore preferred when the light source comprises means for selecting the orientation of the plane of polarization of the irradiating light. Most advantageously, the respective species of the optical information recording medium absorb light of an individually specific orientation of the plane of polarization. This way, the number of species excited by the irradiating light can be limited.
   Also provided is an optical information reading device for reading information from an optical information recording medium according to the invention, comprising:
c) movement means for irradiating a second location on said optical information recording medium with said beam of polarized light, and
d) comparator means for determining a change in the first intensity signal generated upon irradiating said first location and the first intensity signal generated upon irradiating said second location.

This reading device relies on grey level reading and the comparison of the luminescence properties of superjacent locations of an information layer. It therefore allows to decode information represented by an area of oriented nanotubes smaller than the irradiated location. To achieve such high-resolution reading, the device gradually moves the irradiated spot over the optical information recording medium, so that the first and second location have an intersection. From the difference between the intensity of luminescence emanating from the first and second location, the difference in amount of nano-elements emitting the measured luminescence can be calculated. When the amount of luminescent nano-elements is known at a first location, the sequence of information recorded in locations following the first location can be reconstructed.

According to the invention, there is also provided a method of recording information in an optical information recording medium of any of the types described above, said method comprising the step of:
- effecting the absence of nano-elements absorbing linearly polarized light of a predefined plane of polarization in accordance with the information to be recorded.

The method of recording information results in the creation of a pattern of absorption of polarized light in the information layer of the optical recording medium, said pattern corresponding to the information to be recorded. As light absorption by nano-elements corresponds to emission of luminescent light, the absorption pattern corresponds to an emission pattern of luminescent light when the nano-elements of the optical information recording medium are irradiated.

At each location of said pattern, the absence of nano-elements absorbing linearly polarized light of a predefined plane of polarization can be effected by selectively removing such nano-elements, leaving nano-elements absorbing linearly polarized light with planes of polarization oriented differently than the predefined plane of polarization unaffected. Each location therefore can be used to encode for more than one pattern of absorption, depending on the orientation of the predefined plane of polarization associated with the respective pattern of absorption.

Alternatively, all nano-elements at a location of the information layer can be removed, regardless of their respective absorbance characteristics. The pattern thus encoded is very easy to detect, as the requirements regarding the precision of adjusting the plane of polarization can be rather low. Furthermore, it can be easier to remove all nano-elements at a given location, rather than removing them selectively based on their orientation. When optical information recording media with aligned nano-elements are used, for example radially or parallel aligned carbon nanotubes, it is particularly easy to remove all nano-elements at a given location regardless of their orientation, as they are substantially all oriented in one direction.

Preferably, the absence of nano-elements absorbing linearly polarized light of a predefined plane of polarization is effected essentially by destroying the nano-elements absorbing linearly polarized light of essentially the predefined plane of polarization. This can be achieved by burning the nano-elements locally away. To achieve this goal, an appropriate oxidizer, temperature and consistency of the transparent substrate can be chosen readily as described above. It is particularly preferred when the optical information recording medium used in this method comprises oxidizer components close to the nano-elements; this way, the oxidizer component can support burning the nano-elements away.

It is also preferred to effect the absence of nano-elements absorbing linearly polarized light of a predefined plane of polarization by reorienting the nano-elements. Thus, it remains possible to remove only the nano-elements absorbing linearly polarized light of a predefined plane of polarization, allowing other nano-elements at the location acted upon to remain more or less unaffected. Furthermore, reorientation of nano-elements allows to rewrite an optical information storage medium, while destroying the nano-elements in accordance with the information to be recorded only allows for a write-once use of said medium. Of course, the nano-elements can be oriented either by applying a reorienting force onto the nano-elements themselves, or onto particles comprising the nano-elements to be reoriented.

The reorientation of the nano-elements is preferably effected by applying an electrical field in accordance with the information to be recorded. The nano-elements are aligned corresponding to the electrical field applied.

It is also preferred to effect the reorientation of nano-elements by applying a beam of linearly polarized light in accordance with the information to be recorded. The beam of linearly polarized light induces an electrical field in the nano-elements, forcing them to align corresponding to the plane of polarization.

In order to achieve good handling capacities, it is furthermore preferred to effect the reorientation of nano-elements by a method comprising the steps of:
a) providing an optical information recording medium comprising an information layer for carrying an information, said information layer being solid at temperatures below 30 °C, wherein the information layer comprise a nano-element,
b) heating the information layer in accordance with the information to be recorded, to effect the liquefaction of the information layer in the heated areas such as to allow a reorientation of the nano-elements, and
c) reorienting the nano-elements in accordance with the information to be recorded, to effect a pattern of absorption of linearly polarized light, said pattern corresponding to the recorded information.

This method combines the advantages conveyed by a liquefiable information layer with the advantages inherent in reorientation of nano-elements. It is particularly useful to cool each liquefied location of the information layer after the reorientation of the nano-elements of the respective location has been performed so that the information layer turns essentially solid at the cooled location. This additional step enhances the stability of the information recorded onto the information layer by freezing the nano-elements in their reoriented position, preventing their random change of orientation.

A preferred method of reading information from an optic information reading medium of any of the above described types comprising the steps of:
a) irradiating a first location on said optical information recording medium with polarized light of a first orientation of the plane of polarization and a first wavelength,
b) generating a first intensity signal corresponding to the intensity of luminescent light emitted by a first preselected species of nano-elements.
   This method can favorably be carried out by an optical information reading device as described above. The method employs the advantages conferred by said device.
   In a preferred method of reading information, step b) comprises selectively measuring the intensity of luminescent light of a preselected second wavelength and/or orientation of the plane of polarization. This method allows to suppress unwanted luminescence signals, as described above for the respective device.
   Further preferred is a method of reading information, wherein step b) comprises differentiating between polarization-isotropic and polarization-anisotropic luminescence. As has been described above with reference to the respective optical information reading device, this method increases the security of reading information from an optical information recording medium.
   In addition, a method of reading information is preferred, wherein step b) comprises detecting the intensity of luminescent light of two wavelengths when a first location on the optical information recording medium is irradiated with polarized light. Again, the advantages have been described above with reference to the respective optical information reading device.
   Preferably, step a) of the method of reading information comprises selecting the first wavelength from at least two wavelengths. This is particularly advantageous when the optical information recording medium to read information from comprises species differing in the respective irradiation wavelength for inducing luminescence of the respective species, as the method allows to selectively excite nano-elements of one of these species and thereby enhances the signal-to-noise ratio.
   Also preferred is a method of reading information, wherein step b) further comprises simultaneously generating a second intensity signal corresponding to the intensity of luminescent light emitted by a second preselected species of nano-elements. This methods allows to increase reading speed.
   Particularly preferred is a method of reading information, characterized in that in step a) the first location is selectively irradiated with light of a preselected plane of polarization. The method exploits the advantages conveyed by the above described respective device.
   Furthermore a method of reading information is preferred, said method further comprising the steps of:
c) irradiating a second location on said optical information recording medium with said beam of polarized light, and
d) determining a change in the first intensity signal generated upon irradiating said first location and the first intensity signal generated upon irradiating said second location.

This grey level reading method allows to read information stored in locations smaller than the focus of an irradiating light beam.

According to yet another aspect of the invention, there is provided a method of preparing an optical information recording medium as described above for recording information onto the medium, said method comprising the step of:
- applying an electrical field radially relative to an axis of the optical information recording medium, to effect a radial alignment of the nanotubes relative to said axis of the optical information recording medium.

This treatment of an optical information recording medium is particularly suitable to prepare disk shaped media for recording information thereon, as described above.

To produce an optical information recording medium, a method is preferred that comprises the steps of:
a) applying a first pattern of a masking agent onto the surface of a carrier member for carrying nano-elements, then
b) applying nano-elements of a first species of nano-elements onto the surface of said carrier member, where the surface is essentially devoid of said masking agent, then
c) applying a second pattern of a masking agent onto the surface of a carrier member for carrying nano-elements, then
d) applying nano-elements of a second species of nano-elements onto the surface of said carrier member, where the surface is essentially devoid of said masking agent.

The masking agent is preferably chosen in accordance to the application method for applying nano-elements on the surface of the carrier member. For example, when nano-elements are applied by electrophoresis from watery suspension, the masking agent can be a hydrophobic agent. The hydrophobic agent prevents the nano-element suspension from adhering to the surface of the carrier member and therefore prevents the deposition of nano-elements at the masked areas.

The first and second species ofnano-elements can be applied to the same surface of the carrier member. This is particularly useful when creating an optical information recording medium with first and second type locations, particularly in the form of first and second type tracks in one layer.

However, between steps b) and c) an additional carrier layer is preferably applied on the surface of the carrier member, to spatially separate the nano-elements of the first and second species. This way, an optical information recording medium can be created that comprises first locations only in a first information layer and second locations only in a second information layer.

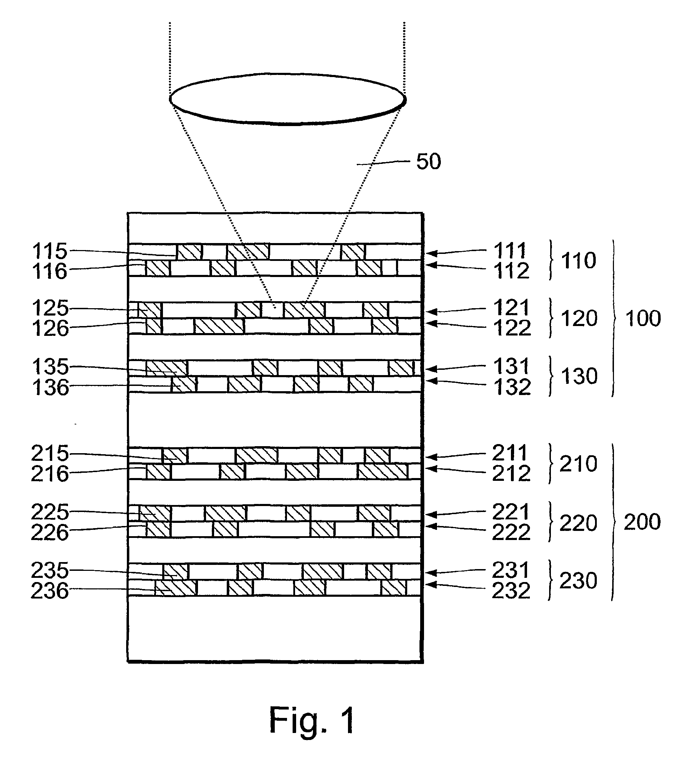

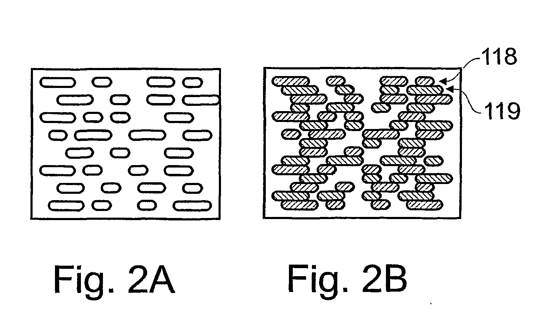

In the following examples, further embodiments of the invention are described with reference to Figs. 1 and 2.

Fig. 1 is a schematic cross-sectional view of an optical information recording medium (1) according to the invention. The optical information recording medium (1) comprises a set of information layers (111, 112, 121, 122, 131, 132, 211, 212, 221, 222, 231, 232) of carbon nanotubes (115, 116, 125, 126, 135, 136, 215, 216, 225, 226, 235, 236). The carbon nanotubes (115, 116, 125, 126, 135, 136, 215, 216, 225, 226, 235, 236) of each information layer form a pattern corresponding to information recorded in the respective information layer. The information layers (111, 112, 121, 122, 131, 132,211,212,221,222, 231, 232) are grouped in pairs (110, 120, 130, 210, 220, 230) of adjacent information layers, each pair being separated by a layer of a transparent substrate. The information layers of each pair (110, 120, 130, 210, 220, 230) comprise nanotubes of one species, that is, the nanotubes of all information layers of one pair emit luminescent light of a wavelength specific for the respective species of nanotubes. Each pair therefore constitutes one deck. Neighboring pairs (110, 120, 130, 210, 220, 230) of information layers differ in the respective species of nanotubes (115, 116, 125, 126, 135, 136, 215, 216, 225, 226, 235, 236), so that the luminescence emission of one pair can be distinguished by wavelength from the luminescence emission of each respective neighboring pair. The optical information recording medium (1) comprises two stacks (100, 200) of pairs (110, 120, 130, 210, 220, 230) of information layers.

For reading information, a light beam (50) of ultraviolet light is focused on a stack comprising the information layer to read. The light beam (50) can be of linear or circularly polarized light or can be of unpolarized light, that is, of light comprising all polarizations. The carbon nanotubes of the information layer to be read absorb the component of light of the light beam (50) consisting of light whose plane of polarization is parallel to the axis of the nanotubes. The carbon nanotubes, having thus absorbed light, react by emitting luminescent light of a wavelength specific to their respective species and with a polarization corresponding to the polarization of the light absorbed by these carbon nanotubes. The emitted light is detected. By determining the intensity of light with a wavelength and polarization specific to the nanotubes of the information layer to read, the pattern of information encoded in said information layer is reconstructed and thereby read.

Fig. 2a schematically shows a track structure of a conventional CD. The tracks are arranged in parallel. Between the individual tracks, plenty of space is left unused, to prevent signals from neighbor tracks interfering with the signals generated by irradiating a location of a selected track.

Fig. 2b schematically shows a track structure of an optical information recording medium according to the invention. Again, there are two track 118, 119 visible. The tracks 118, 119 run in parallel. However, track 118 comprises nano-elements exclusively of one species, indicated by right-ascending symbols, whereas track 119 comprises nano-elements exclusively of an other species, indicated by left-ascending symbols. Tracks 118 and 119 lie closely together, some locations of the tracks 118, 119 are even adjacent. However, when reading information from locations of any of the tracks 118, 119, the luminescent signal generated from locations of the selected track 118, 119 results exclusively from the luminescence of the nano-elements forming the track 118, 119 in question; this signal can therefore be discriminated against any unwanted signals resulting from luminescence of neighboring locations.

## Claims

1. Optical information recording medium, comprising nano-elements selected from the group consisting of nanotubes and nanowires, said nano-elements being capable of emitting luminescent light.

2. Optical information recording medium according to claim 1, comprising a first and a second species of nano-elements, said species differing in:
a) luminescence wavelengths,
b) the orientation of the plane of polarization of luminescent light, or
c) both a) and b).

3. Optical information recording medium according to claim 2, wherein the two species further differ in the respective irradiation wavelength for inducing luminescence of the respective species.

4. Optical information recording medium according to claim 2, wherein the nano-elements are semi-conducting nano-elements.

5. Optical information recording medium according to claim 2, wherein the nano-elements of at least one species emit luminescent light in the range of visible wavelengths.

6. Optical information recording medium according to claim 2, wherein the two species are selected from the group consisting of InAs, GaAs, GaN, InP, CdSe, CdS, ZnS, ZnSe, ZnO, GaP, BN, NiCl₂, MoS₂, WS₂, SiC, Si and C nano-elements.

7. Optical information recording medium according to claim 2, wherein the nano-elements are single-walled nanotubes.

8. Optical information recording medium according to claim 6, **characterized in that** the nano-elements are carbon nanotubes.

9. Optical information recording medium according to claim 2, wherein the two species differ in composition.

10. Optical information recording medium according to claim 2, wherein the two species differ in diameter.

11. Optical information recording medium according to claim 2, **characterized in that** the first and second species of nano-elements further differ in the orientation of the plane of polarization of light absorbed by said nano-elements.

12. Optical information recording medium according to claim 2, **characterized in that** it comprises first and second type locations, said first type locations comprising nano-elements of the first species and being essentially devoid of nano-elements of the second species, and said second type locations comprising nano-elements of the second species, and being essentially devoid of nano-elements of the first species.

13. Optical information recording medium according to claim 12, **characterized in that** the first and second type locations are arranged in first and second type tracks, respectively, each first type track comprising first type locations and being essentially devoid of second type locations, and each second type track comprising second type locations and being essentially devoid of first type locations.

14. Optical information recording medium according to claim 12, further comprising a first type information layer for carrying an information, said first type information layer comprising first type locations and being essentially devoid of second type locations, and a second type information layer for carrying an information, said second type information layer comprising second type locations and being essentially devoid of first type locations.

15. Optical information recording medium according to claim 14, **characterized in that** for each location of an information layer, all neighbour locations of neighbour information layers are essentially devoid of nano-elements emitting light absorbed by the nano-elements of the location in question.

16. Optical information reading device for reading information from an optical information recording medium according to claim 1, comprising
a) a light source for irradiating a first location on said optical information recording medium with polarized light of a first orientation of the plane of polarization and a first wavelength,
b) detector means for generating a first intensity signal corresponding to the intensity of luminescent light emitted by a first preselected species of nano-elements.

17. Optical information reading device according to claim 16, wherein the detector means comprise filter means for selectively measuring the intensity of luminescent light of a preselected second wavelength and/or orientation of the plane of polarization.

18. Optical information reading device according to claim 16, wherein the detector means are equipped to differentiate between polarization-isotropic and polarization-anisotropic luminescence.

19. Optical information reading device according to claim 16, wherein the detector means are equipped to detect the intensity of luminescent light of two wavelengths.

20. Optical information reading device according to claim 16, wherein the light source is equipped to emit light of at least two wavelengths.

21. Optical information reading device according to claim 16, wherein the detector means are additionally equipped to simultaneously generate a second intensity signal corresponding to the intensity of luminescent light emitted by a second preselected species of nano-elements.

22. Optical information reading device according to claim 16, wherein the light source comprises means for selecting the orientation of the plane of polarization of the irradiating light.

23. Optical information reading device according to claim 16, further comprising:
c) movement means for irradiating a second location on said optical information recording medium with said beam of polarized light, and
d) comparator means for determining a change in the first intensity signal generated upon irradiating said first location and the first intensity signal generated upon irradiating said second location.

24. Method of reading information from an optic information reading medium according to claim 2, comprising the steps of:
a) irradiating a first location on said optical information recording medium with polarized light of a first orientation of the plane of polarization and a first wavelength,
b) generating a first intensity signal corresponding to the intensity of luminescent light emitted by a first preselected species of nano-elements.

25. Method of reading information according to claim 24, wherein step b) comprises selectively measuring the intensity of luminescent light of a preselected second wavelength and/or orientation of the plane of polarization.

26. Method of reading information according to claim 24, wherein step b) comprises differentiating between polarization-isotropic and polarization-anisotropic luminescence.

27. Method of reading information according to claim 24, wherein step b) comprises detecting the intensity of luminescent light of two wavelengths when a first location on the optical information recording medium is irradiated with polarized light.

28. Method of reading information according to claim 24, wherein step a) comprises selecting the first wavelength from at least two wavelengths.

29. Method of reading information according to claim 24, wherein step b) further comprises simultaneously generating a second intensity signal corresponding to the intensity of luminescent light emitted by a second preselected species of nano-elements.

30. Method of reading information according to claim 24, **characterized in that** in step a) the first location is selectively irradiated with light of a preselected plane of polarization.

31. Method of reading information according to claim 24, further comprising the steps of:
c) irradiating a second location on said optical information recording medium with said beam of polarized light, and
d) determining a change in the first intensity signal generated upon irradiating said first location and the first intensity signal generated upon irradiating said second location.

32. Method of producing an optical information recording medium according to claim 1, comprising the steps of:
a) applying a first pattern of a masking agent onto the surface of a carrier member for carrying nano-elements, then
b) applying nano-elements of a first species of nano-elements onto the surface of said carrier member, where the surface is essentially devoid of said masking agent, then
c) applying a second pattern of a masking agent onto the surface of a carrier member for carrying nano-elements, then
d) applying nano-elements of a second species of nano-elements onto the surface of said carrier member, where the surface is essentially devoid of said masking agent.

33. Production method according to claim 32, **characterized in that** between steps b) and c), an additional carrier layer is applied on the surface of the carrier member, to spatially separate the nano-elements of the first and second species.

## Patentansprüche

1. Optisches Informationsaufzeichnungsmedium, umfassend Nanoelemente, die aus der Gruppe der Nanorohre und Nanodrähte gewählt werden, wobei diese Nanoelemente in der Lage sind, Lumineszenzlicht zu emittieren.

2. Optisches Informationsaufzeichnungsmedium nach Anspruch 1, umfassend eine erste und eine zweite Sorte von Nanoelementen, wobei diese Sorten sich unterscheiden in:
a) Lumineszenzwellenlängen,
b) der Orientierung der Polarisationsebene des Lumineszenzlichts, oder
c) sowohl a) als auch b).

3. Optisches Informationsaufzeichnungsmedium nach Anspruch 2, wobei die zwei Sorten sich ferner in den jeweiligen Bestrahlungswellenlängen zum Induzieren der Lumineszenz der jeweiligen Sorten unterscheiden.

4. Optisches Informationsaufzeichnungsmedium nach Anspruch 2, wobei die Nanoelemente halbleitende Nanoelemente sind.

5. Optisches Informationsaufzeichnungsmedium nach Anspruch 2, wobei die Nanoelemente mindestens einer Sorte Lumineszenzlicht im Bereich der sichtbaren Wellenlängen emittieren.

6. Optisches Informationsaufzeichnungsmedium nach Anspruch 2, wobei die zwei Sorten aus der Gruppe gewählt werden, die aus InAs, GaAs, GaN, InP, CdSe, CdS, ZnS, ZnSe, ZnO, GaP, BN, NiCl₂, MoS₂, WS₂, SiC, Si und C-Nanoelementen besteht.

7. Optisches Informationsaufzeichnungsmedium nach Anspruch 2, wobei die Nanoelemente einwandige Nanorohre sind.

8. Optisches Informationsaufzeichnungsmedium nach Anspruch 6, **dadurch gekennzeichnet, dass** die Nanoelemente Kohlenstoffnanorohre sind.

9. Optisches Informationsaufzeichnungsmedium nach Anspruch 2, wobei die zwei Sorten sich in der Zusammensetzung unterscheiden.

10. Optisches Informationsaufzeichnungsmedium nach Anspruch 2, wobei die zwei Sorten sich im Durchmesser unterscheiden.

11. Optisches Informationsaufzeichnungsmedium nach Anspruch 2, **dadurch gekennzeichnet, dass** die erste und zweite Sorte von Nanoelementen sich außerdem in der Orientierung der Polarisationsebene des von den Nanoelementen absorbierten Lichts unterscheiden.

12. Optisches Informationsaufzeichnungsmedium nach Anspruch 2, **dadurch gekennzeichnet, dass** es Stellen ersten und zweiten Typs umfasst, wobei die Stellen ersten Typs Nanoelemente der ersten Sorte umfassen und im wesentlichen frei von Nanoelementen der zweiten Sorte sind, und die Stellen zweiten Typs Nanoelemente der zweiten Sorte umfassen und im wesentlichen frei von Nanoelementen der ersten Sorte sind.

13. Optisches Informationsaufzeichnungsmedium nach Anspruch 12, **dadurch gekennzeichnet, dass** die Stellen ersten und zweiten Typs jeweils in Spuren ersten und zweiten Typs angeordnet sind, wobei jede Spur ersten Typs Stellen ersten Typs umfasst und im wesentlichen frei von Stellen zweiten Typs ist, und jede Spur zweiten Typs Stellen zweiten Typs umfasst und im wesentlichen frei von Stellen ersten Typs ist.

14. Optisches Informationsaufzeichnungsmedium nach Anspruch 12, außerdem umfassend eine Informationsschicht ersten Typs zum Tragen einer Information, wobei diese Informationsschicht ersten Typs Stellen ersten Typs umfasst und im wesentlichen frei von Stellen zweiten Typs ist, und eine Informationsschicht zweiten Typs zum Tragen einer Information, wobei diese Informationsschicht zweiten Typs Stellen zweiten Typs umfasst und im wesentlichen frei von Stellen ersten Typs ist.

15. Optisches Informationsaufzeichnungsmedium nach Anspruch 14, **dadurch gekennzeichnet, dass** für jede Stelle einer Informationsschicht alle benachbarten Stellen von benachbarten Informationsschichten im wesentlichen frei von Nanoelementen sind, die Licht emittieren, das von den Nanoelementen der betreffenden Stelle absorbiert wird.

16. Optisches Informationslesegerät zum Lesen von Information von einem optischen Informationsaufzeichnungsmedium nach Anspruch 1, umfassend
a) eine Lichtquelle, um eine erste Stelle auf dem Informationsaufzeichnungsmedium mit polarisiertem Licht einer ersten Orientierung der Polarisationsebene und einer ersten Wellenlänge zu bestrahlen,
b) Detektormittel, um ein Signal einer ersten Intensität zu erzeugen, die der Intensität des Lumineszenzlichts entspricht, das von einer ersten vorgewählten Sorte von Nanoelementen emittiert wird.

17. Optisches Informationslesegerät nach Anspruch 16, wobei die Detektormittel Filtermittel zur selektiven Messung der Intensität des Lumineszenzlichts einer vorgewählten zweiten Wellenlänge und/oder Orientierung der Polarisationsebene umfasst.

18. Optisches Informationslesegerät nach Anspruch 16, wobei die Detektormittel ausgestattet sind, um zwischen polarisationsisotoper und polarisationsanisotoper Lumineszenz zu differenzieren.

19. Optisches Informationslesegerät nach Anspruch 16, wobei die Detektormittel ausgestattet sind, um die Intensität des Lumineszenzlichts zweier Wellenlängen zu erkennen.

20. Optisches Informationslesegerät nach Anspruch 16, wobei die Lichtquelle ausgestattet ist, um Licht von mindestens zwei Wellenlängen zu emittieren.

21. Optisches Informationslesegerät nach Anspruch 16, wobei die Detektormittel zusätzlich ausgestattet sind, um gleichzeitig ein zweites Intensitätssignal zu erzeugen, das der Intensität des Lumineszenzlichts entspricht, das von einer zweiten vorgewählten Sorte von Nanoelementen emittiert wird.

22. Optisches Informationslesegerät nach Anspruch 16, wobei die Lichtquelle Mittel umfasst, um die Orientierung der Polarisationsebene des Bestrahlungslichts zu wählen.

23. Optisches Informationslesegerät nach Anspruch 16, außerdem umfassend:
c) Bewegungsmittel zum Bestrahlen einer zweiten Stelle auf dem optischen Informationsaufzeichnungsmedium mit dem Strahl polarisierten Lichts, und
d) Komparatormittel zum Bestimmen einer Änderung im ersten Intensitätssignal, das beim Bestrahlen der ersten Stelle erzeugt wird, und im ersten Intensitätssignal, das beim Bestrahlen der zweiten Stelle erzeugt wird.

24. Verfahren zum Lesen von Information von einem optischen Informationsaufzeichnungsmedium nach Anspruch 2, umfassend die Schritte des:
a) Bestrahlens einer ersten Stelle des optischen Informationsaufzeichnungsmediums mit polarisiertem Licht einer ersten Orientierung der Polarisationsebene und einer ersten Wellenlänge,
b) Erzeugens eines ersten Intensitätssignals, das der Intensität des Lumineszenzlichts entspricht, das von einer ersten vorgewählten Sorte von Nanoelementen emittiert wird.

25. Verfahren zum Lesen von Information nach Anspruch 24, wobei Schritt b) das selektive Messen der Intensität des Lumineszenzlichts einer vorgewählten zweiten Wellenlänge und/oder Orientierung der Polarisationsebene umfasst.

26. Verfahren zum Lesen von Information nach Anspruch 24, wobei Schritt b) das Differzenzieren zwischen polarisationsisotoper und polarisationsanisotoper Lumineszenz umfasst.

27. Verfahren zum Lesen von Information nach Anspruch 24, wobei Schritt b) das Erkennen der Intensität des Lumineszenzlichts zweier Wellenlängen umfasst, wenn eine erste Stelle auf dem optischen Informationsaufzeichnungsmedium mit polarisiertem Licht bestrahlt wird.

28. Verfahren zum Lesen von Information nach Anspruch 24, wobei Schritt a) das Wählen der ersten Wellenlänge von mindestens zwei Wellenlängen umfasst.

29. Verfahren zum Lesen von Information nach Anspruch 24, wobei Schritt b) außerdem das gleichzeitige Erzeugen eines zweiten Intensitätssignals umfasst, das der Intensität des Lumineszenzlichts entspricht, das von einer zweiten vorgewählten Sorte von Nanoelementen emittiert wird.

30. Verfahren zum Lesen von Information nach Anspruch 24, **dadurch gekennzeichnet, dass** in Schritt a) die erste Stelle auf selektive Weise mit Licht einer vorgewählten Orientierung der Polarisationsebene bestrahlt wird.

31. Verfahren zum Lesen von Information nach Anspruch 24, außerdem umfassend die Schritte des:
c) Bestrahlens einer zweiten Stelle auf dem optischen Informationsaufzeichnungsmedium mit einem Strahl polarisierten Lichts, und
d) Bestimmens einer Änderung im ersten Intensitätssignal, das beim Bestrahlen der ersten Stelle erzeugt wird, und im ersten Intensitätssignal, das beim Bestrahlen der zweiten Stelle erzeugt wird.

32. Herstellungsverfahren für ein optisches Informationsaufzeichnungsmedium nach Anspruch 1, umfassend die Schritte des:
a) Aufbringens eines ersten Musters eines Maskierungsmittels auf die Oberfläche eines Trägerkörpers zum Tragen von Nanoelementen, dann
b) Aufbringens von Nanoelementen einer ersten Sorte von Nanoelementen auf die Oberfläche dieses Trägerkörpers dort, wo die Oberfläche im wesentlichen frei von Maskierungsmittel ist, dann
c) Aufbringens eines zweiten Musters eines Maskierungsmittels auf die Oberfläche eines Trägerkörpers zum Tragen von Nanoelementen, dann
d) Aufbringens von Nanoelementen einer zweiten Sorte von Nanoelementen auf die Oberfläche dieses Trägerkörpers dort, wo die Oberfläche im Wesentlichen frei von Maskierungsmittel ist.

33. Herstellungsverfahren nach Anspruch 32, **dadurch gekennzeichnet, dass** zwischen den Schritten b) und c) eine zusätzliche Trägerschicht auf die Oberfläche des Trägerkörpers aufgebracht wird, um die Nanoelemente der ersten und zweiten Sorte räumlich zu trennen.

## Revendications

1. Support d'enregistrement optique d'informations comprenant des nanoéléments sélectionnés dans le groupe composé de nanotubes et de nanofils, lesdits nanoéléments étant capables d'émettre une lumière luminescente.

2. Support d'enregistrement optique d'informations selon la revendication 1, comprenant une première et une deuxième espèces de nanoéléments, lesdites espèces différant par :
a) des longueurs d'onde de luminescence,
b) l'orientation du plan de polarisation de la lumière luminescente, ou
c) à la fois a) et b).

3. Support d'enregistrement optique d'informations selon la revendication 2, dans lequel les deux espèces diffèrent en outre par les longueurs d'onde d'irradiation respectives pour induire une luminescence de l'espèce respective.

4. Support d'enregistrement optique d'informations selon la revendication 2, dans lequel les nanoéléments sont des nanoéléments semi-conducteurs.

5. Support d'enregistrement optique d'informations selon la revendication 2, dans lequel les nanoéléments d'au moins une espèce émettent une lumière luminescente dans la plage des longueurs d'onde visibles.

6. Support d'enregistrement optique d'informations selon la revendication 2, dans lequel les deux espèces sont sélectionnées dans le groupe composé de nanoéléments de InAs, GaAs, GaN, InP, CdSe, CdS, ZnS, ZnSe, ZnO, GaP, BN, NiCl2, MoS2, WS2, SiC, Si et C.

7. Support d'enregistrement optique d'informations selon la revendication 2, dans lequel les nanoéléments sont des nanoéléments monofeuillets.

8. Support d'enregistrement optique d'informations selon la revendication 6, **caractérisé en ce que** les nanoéléments sont des nanotubes de carbone.

9. Support d'enregistrement optique d'informations selon la revendication 2, dans lequel les deux espèces diffèrent en composition.

10. Support d'enregistrement optique d'informations selon la revendication 2, dans lequel les deux espèces diffèrent en diamètre.

11. Support d'enregistrement optique d'informations selon la revendication 2, **caractérisé en ce que** les première et deuxième espèces de nanoéléments diffèrent en outre par l'orientation du plan de polarisation d'une lumière absorbée par lesdits nanoéléments.

12. Support d'enregistrement optique d'informations selon la revendication 2, **caractérisé en ce qu'**il comprend des localisations de premier et de deuxième type, lesdites localisations de premier type comprenant des nanoéléments de la première espèce et étant essentiellement dépourvues de nanoéléments de la deuxième espèce, et lesdites localisations de deuxième type comprenant des nanoéléments de la deuxième espèce et étant essentiellement dépourvues de nanoéléments de la première espèce.

13. Support d'enregistrement optique d'informations selon la revendication 12, **caractérisé en ce que** les localisations des premier et deuxième types sont disposées respectivement en pistes de premier et de deuxième type, chaque piste de premier type comprenant des localisations de premier type et étant essentiellement dépourvue de localisations de deuxième type, et chaque piste de deuxième type comprenant des localisations de deuxième type et étant essentiellement dépourvue de localisations de premier type.

14. Support d'enregistrement optique d'informations selon la revendication 12, comprenant en outre une couche d'informations de premier type pour porter des informations, ladite couche d'informations de premier type comprenant des localisations de premier type et étant essentiellement dépourvue de localisations de deuxième type, et une couche d'informations de deuxième type pour porter des informations, ladite couche d'informations de deuxième type comprenant des localisations de deuxième type et étant essentiellement dépourvue de localisations de premier type.

15. Support d'enregistrement optique d'informations selon la revendication 14, **caractérisé en ce que**, pour chaque localisation d'une couche d'informations, toutes les localisations voisines de couches d'informations voisines sont essentiellement dépourvues de nanoéléments qui émettent une lumière absorbée par les nanoéléments de la localisation en question.

16. Dispositif de lecture optique d'informations pour lire des informations d'un support d'enregistrement optique d'informations selon la revendication 1, comprenant
a) une source de lumière pour irradier une première localisation sur ledit support d'enregistrement optique d'informations avec une lumière polarisée d'une première orientation du plan de polarisation et d'une première longueur d'onde,
b) un moyen de détection pour générer un premier signal d'intensité qui correspond à l'intensité d'une lumière luminescente émise par une première espèce présélectionnée de nanoéléments.

17. Dispositif de lecture optique d'informations selon la revendication 16, dans lequel le moyen de détection comprend un moyen de filtrage pour mesurer sélectivement l'intensité d'une lumière luminescente d'une deuxième longueur d'onde et / ou orientation du plan de polarisation présélectionnée(s).

18. Dispositif de lecture optique d'informations selon la revendication 16, dans lequel le moyen de détection est équipé pour faire la différence entre des luminescences à polarisation isotrope et à polarisation anisotrope.

19. Dispositif de lecture optique d'informations selon la revendication 16, dans lequel le moyen de détection est équipé pour détecter l'intensité de lumières luminescentes de deux longueurs d'onde.

20. Dispositif de lecture optique d'informations selon la revendication 16, dans lequel la source de lumière est équipée pour émettre une lumière d'au moins deux longueurs d'onde.

21. Dispositif de lecture optique d'informations selon la revendication 16, dans lequel le moyen de détection est additionnellement équipé pour générer simultanément un deuxième signal d'intensité qui correspond à l'intensité d'une lumière luminescente émise par une deuxième espèce présélectionnée de nanoéléments.

22. Dispositif de lecture optique d'informations selon la revendication 16, dans lequel la source de lumière comprend un moyen pour sélectionner l'orientation du plan de polarisation de la lumière irradiante.

23. Dispositif de lecture optique d'informations selon la revendication 16, comprenant en outre :
c) un moyen de déplacement pour irradier une deuxième localisation sur ledit support d'enregistrement optique d'informations avec ledit faisceau de lumière polarisée, et
d) un moyen de comparaison pour déterminer une variation dans le premier signal d'intensité généré en irradiant ladite première localisation et le premier signal d'intensité généré en irradiant ladite deuxième localisation.

24. Procédé de lecture d'informations à partir d'un support d'enregistrement optique d'informations selon la revendication 2, comprenant les étapes suivantes :
a) irradier une première localisation sur ledit support d'enregistrement optique d'informations avec une lumière polarisée d'une première orientation du plan de polarisation et d'une première longueur d'onde, et
b) générer un premier signal d'intensité qui correspond à l'intensité d'une lumière luminescente émise par une première espèce présélectionnée de nanoéléments.

25. Procédé de lecture d'informations selon la revendication 24, dans lequel l'étape b) comprend le fait de mesurer de façon sélective l'intensité d'une lumière luminescente d'une deuxième longueur d'onde et / ou orientation du plan de polarisation présélectionnée(s).

26. Procédé de lecture d'informations selon la revendication 24, dans lequel l'étape b) comprend le fait d'établir une différence entre une luminescence à polarisation isotrope et une luminescence à polarisation anisotrope.

27. Procédé de lecture d'informations selon la revendication 24, dans lequel l'étape b) comprend le fait de détecter l'intensité de lumières luminescentes de deux longueurs d'onde quand une première localisation du support d'enregistrement optique d'informations est irradiée par une lumière polarisée.

28. Procédé de lecture d'informations selon la revendication 24, dans lequel l'étape a) comprend le fait de sélectionner la première longueur d'onde parmi au moins deux longueurs d'onde.

29. Procédé de lecture d'informations selon la revendication 24, dans lequel l'étape b) comprend en outre le fait de générer simultanément un deuxième signal d'intensité qui correspond à l'intensité d'une lumière luminescente émise par une deuxième espèce présélectionnée de nanoéléments.

30. Procédé de lecture d'informations selon la revendication 24, **caractérisé en ce que**, à l'étape a), la première localisation est irradiée sélectivement avec une lumière d'un plan de polarisation présélectionné.

31. Procédé de lecture d'informations selon la revendication 24, comprenant en outre les étapes suivantes :
c) irradier une deuxième localisation sur ledit support d'enregistrement optique d'informations avec ledit faisceau de lumière polarisée, et
d) déterminer une variation dans le premier signal d'intensité généré en irradiant ladite première localisation et le premier signal d'intensité généré en irradiant ladite deuxième localisation.

32. Procédé de production d'un support d'enregistrement optique d'informations selon la revendication 1, comprenant les étapes suivantes :
a) appliquer un premier motif d'un agent masquant sur la surface d'un élément porteur pour porter des nanoéléments, puis
b) appliquer des nanoéléments d'une première espèce de nanoéléments sur la surface dudit élément porteur où la surface est essentiellement dépourvue dudit agent masquant, puis
c) appliquer un deuxième motif d'un agent masquant sur la surface d'un élément porteur pour porter des nanoéléments, puis
d) appliquer des nanoéléments d'une deuxième espèce de nanoéléments sur la surface dudit élément porteur où la surface est essentiellement dépourvue dudit agent masquant.

33. Procédé de production selon la revendication 32, **caractérisé en ce que**, entre les étapes b) et c), une couche porteuse additionnelle est appliquée sur la surface de l'élément porteur, pour séparer spatialement les nanoéléments des première et deuxième espèces.
